# EUROPÄISCHE PATENTSCHRIFT

(11) **EP 1 562 722 B1**
(45) Veröffentlichungstag und Bekanntmachung des Hinweises auf die Patenterteilung: **29.11.2006**
(21) Anmeldenummer: 03767507.1
(22) Anmeldetag: 08.10.2003
(51) Int. Cl.: B23Q 17/24, B25F 5/00

(54) **ELEKTROWERKZEUG**
ELECTRIC TOOL
OUTIL ELECTRIQUE

(30) Priorität: 17.10.2002 DE 10248924
(43) Veröffentlichungstag der Anmeldung: 17.08.2005
(73) Patentinhaber: C. & E. Fein GmbH, 73529 Schwäbisch Gmünd-Bargau (DE)
(72) Erfinder: BRAUN, Sigmund, 72127 Kusterdingen (DE); RUDOLF, Boris, 70192 Stuttgart (DE)
(74) Vertreter: Gahlert, Stefan
(86) Internationale Anmeldenummer: PCT/EP2003/011098
(87) Internationale Veröffentlichungsnummer: WO 2004/035259

(56) Entgegenhaltungen:
- EP-A- 0 255 661
- DE-A- 19 714 248
- US-A- 2 517 882
- US-A- 4 519 780
- US-A- 5 038 481

## Beschreibung

Die Erfindung betrifft ein Elektrowerkzeug mit einem Gehäuse, mit einem Elektromotor zum Antrieb eines Werkzeugs und mit mindestens einem Lichtleiter, der mit einem Tragelement kombiniert ist.

Ein derartiges Elektrowerkzeug ist aus der US 2,517,882 bekannt.

US 2,517,882 zeigt ein handgeführtes Elektrowerkzeug, mit einer Beleuchtungseinrichtung für den Arbeitsbereich. Dazu ist in dem Gehäuse des Elektrowerkzeugs eine Glühlampe integriert, deren Licht auf eine transparente Düse trifft, die das Licht in Richtung des Arbeitsbereichs führt. Die Düse soll hierbei sowohl Luft zum Säubern des Arbeitsbereichs als auch Licht zum Beleuchten des Arbeitsbereichs führt.

US 4,519,780 zeigt ein handgeführtes zahnärztliches Instrument, bei dem mittels eines Lichtleiters Licht auf den Arbeitsbereich des Werkzeugs abgestrahlt wird. Ein direkt im Gehäuse integrierter Lichtleiter führt durch zwei Teile des Instruments, die gegeneinander verdreht werden können. Es werden Lichtübertragungsringe vorgeschlagen, die an der Schnittstelle zwischen den beiden Teilen angeordnet sind und in jeder relativen Position der beiden Teile zueinander eine Übertragung von Licht ermöglichen sollen.

Aus der US 5,038,481 ist zudem eine Stichsäge bekannt, die mit einer Lichtquelle zur Beobachtung der Schnittstelle ausgestattet ist. Die Lichtquelle kann über einen Lichtleiter angeschlossen sein.

Aus der DE 197 14 248 A1 ist ferner eine Kleinmotoreneinheit für ein Elektrohandwerkzeug bekannt geworden, die insbesondere bei der Dentalbehandlung zum Antrieb von Zahnbohrern, Polier-, Schleif-, Fräswerkzeugen, Schraubwerkzeugen usw. verwendbar ist. Um eine besonders gute Handhabbarkeit zu gewährleisten, ist hierbei eine Versorgungseinheit für den Kleinmotor drehkontaktlos mit dem Kleinmotor verbunden, wozu vorzugsweise eine Steckverbindung und eine Drehbegrenzung vorgesehen sind. Die Steckverbindung kann zur elektrischen Verbindung, sowie zur Verbindung von Fluidleitungen ausgebildet sein. Ferner kann im Arbeitsbereich des Elektrowerkzeuges eine über einen Lichtleiter an die Kleinmotoreinheit ankoppelbare Lampe vorgesehen sein.

In jüngster Zeit wurden von der Anmelderin Elektrowerkzeuge vorgeschlagen, die mittels optischer Schalter gesteuert werden, wobei die optischen Schalter jeweils zwei Lichtleiter aufweisen, zwischen denen eine Lichtsignalübertragung über ein Kontrollelement beeinflussbar ist. In Abhängigkeit von dem erhaltenen Signal wird dann von einer Auswerteelektronik der Schalterausgang gesteuert.

Derartige optische Schalter sind aus der deutschen Patentanmeldung 101 41 161.8 bekannt, die jedoch nicht vorveröffentlicht ist.

Werden Lichtleiter bei Elektrowerkzeugen zum Aufbau von optischen Schaltern oder Sensoren verwendet, so steht hierbei eine hohe Zuverlässigkeit, sowie eine einfache und kostengünstige Montage im Vordergrund.

Der Erfindung liegt somit die Aufgabe zugrunde, eine verbesserte Montagemöglichkeit für Lichtleiter bei einem Elektrowerkzeug zu schaffen, wodurch eine besonders einfache Montage erreicht wird und die betreffenden Lichtleiter gegen Verschmutzungen möglichst geschützt sein sollen. Dabei soll eine besonders hohe Zuverlässigkeit während des Betriebs des Elektrowerkzeugs erreicht werden.

Diese Aufgabe wird durch ein Elektrowerkzeug der eingangs genannten Art gelöst, bei dem das Tragelement als vorgeformtes, selbstständig tragendes, vom Gehäuse getrenntes Teil ausgebildet ist, das mit mehreren daran befestigten Lichtleitern zu einer formstabilen Einheit zusammengefügt und am Gehäuse montiert ist, um die Lichtleiter relativ zum Gehäuse zu positionieren.

Die Aufgabe der Erfindung wird auf diese Weise vollkommen gelöst.

Auf diese Weise ist jeder Lichtleiter gut gegen Erschütterungen, Umwelteinflüsse und dergleichen mehr geschützt. Ein günstiges Signal/Rauschverhältnis wird durch eine präzise Ausrichtung von einander zugeordneten Lichtleitern und durch eine weitgehende Abschirmung gegen Staub und dgl. erzielt. Ferner wird die Montage vereinfacht, da jeder Lichtleiter mit dem Tragelement kombiniert ist, so dass nur noch ein bereits komplettiertes Tragelement montiert werden muss. Eine Montage von einzelnen, nicht stabilisierten und geschützten Lichtleitern wird so vermieden.

Bei dem so gebildeten Tragelement handelt es sich um ein vom Gehäuse getrenntes Teil, das der Aufnahme, der korrekten Positionierung und dem Schutz der damit verbundenen oder darin integrierten Lichtleiter dient. Es wird nach Integration der Lichtleiter und ggf. weiterer damit verbundener Teile in geeigneter Weise mit dem Gehäuse des Elektrowerkzeugs verbunden.

Gemäß einer Weiterbildung der Erfindung weist das Tragelement einen Formkörper auf, in dem Ausnehmungen zur Aufnahme von Lichtleitern vorgesehen sind.

Bei dieser Ausführung können also Lichtleiter in die Aufnahmen eingelegt und befestigt werden.

Es kann sich bei den Lichtleitern um starre oder flexible Lichtleiter aus Kunststoff handeln. Daneben können natürlich auch Glasfaserlichtleiter verwendet werden, vorzugsweise in Form von ummantelten Glasfaserbündeln.

Die Lichtleiter können als starre Lichtleiter etwa als Spritzgussteile hergestellt sein und in die entsprechenden Ausnehmungen eingelegt werden. Jedoch können auch flexible Lichtleiter verwendet werden, die in geeigneter Weise an dem Tragelement befestigt werden.

Bei dem Tragelement kann es sich um ein vorgeformtes Teil, etwa ein Spritzgussteil aus Kunststoff handeln, in das die fertigen Lichtleiter eingelegt bzw. in sonstiger Weise daran befestigt werden.

Grundsätzlich können die Lichtleiter als vollständig ummantelte Lichtleiter ausgebildet sein, deren Ummantelung mit einem optisch dünneren Medium die notwendige Totalreflektion sicherstellt. Hiermit ergibt sich auch ein besonders gutes Signal/Rauschverhältnis.

Der Formkörper kann ferner Befestigungspunkte für den Lichtleitern zugeordnete Sende- oder Empfangselemente oder für Schaltelemente zur Beeinflussung von Strahlung aufweisen, die von den Lichtleitern übertragen wird.

Ferner kann der Formkörper Aufnahmepunkte zur Aufnahme von LEDs aufweisen.

Auf diese Weise können neben den Lichtleitern auch die dazugehörigen Sende- oder Empfangselemente und nebst der zugehörigen Schaltelemente an den Tragelementen befestigt werden, wodurch insgesamt ein einfacherer Aufbau und eine einfachere Montage ermöglicht wird.

Des weiteren ist bevorzugt, dass der Formkörper mit dem Gehäuse des Elektrowerkzeugs zur Abdichtung der im Formkörper aufgenommenen Lichtleiter und/oder damit gekoppelter Sende- oder Empfangselemente oder Schaltelemente gegenüber Kontamination durch Staub oder dergleichen zusammenwirkt.

Auf diese Weise wird eine größere Betriebssicherheit erreicht, da Staub und dergleichen durch das Tragelement von den Lichtleitern abgeschirmt werden. Dies ist insbesondere bei Elektrowerkzeugen wichtig, bei denen mit starkem Staubanfall zu rechnen ist, wie z.B. bei Schleifern.

In zusätzlicher Weiterbildung der Erfindung besteht der Formkörper aus einem vibrationsdämpfenden und/oder akustisch dämpfenden Material.

Auch hierdurch wird die Betriebssicherheit verbessert und zusätzlich eine günstigere Ergonomie erzielt.

Der Formkörper kann beispielsweise als dreidimensional verformte Platte hergestellt sein und als Kunststoffpressteil oder Kunststoffspritzgussteil ausgebildet sein.

Auf diese Weise lässt sich eine kostengünstige Herstellung und Anpassung an die unterschiedlichsten Formen gewährleisten.

Zusätzlich kann der Formkörper Ausnehmungen und/oder Vorsprünge zur Aufnahme von Teilen des Elektrowerkzeuges oder zur Verbindung mit Teilen des Elektrowerkzeuges aufweisen.

Auf diese Weise wird eine günstige Einpassung des flächig ausgebildeten Tragelementes in das Elektrowerkzeug erreicht.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Ansicht eines erfindungsgemäßen Elektrowerkzeuges in Form eines Winkelschleifers, schräg von oben gesehen, jedoch im lediglich teilweise montierten Zustand, mit einem stabförmigen Gehäuse;
- Fig. 2: eine Seitenansicht des Elektrowerkzeuges gemäß Fig. 1;
- Fig. 3: eine vergrößerte Darstellung des Elektrowerkzeuges gemäß Fig. 1 im Bereich zwischen Werkzeugkopf und Stator;
- Fig. 4: eine Ansicht des Tragelementes gemäß Fig. 1; und
- Fig. 5: eine Ansicht des Lichtleiterbündels, das in das Tragelement gemäß Fig. 4 eingesetzt wird.

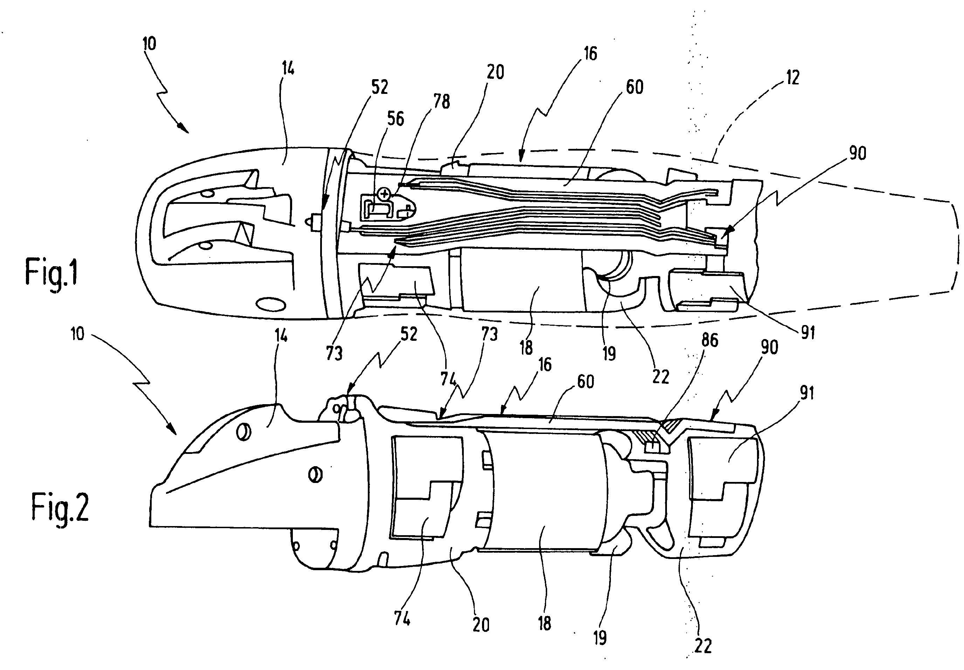

In Fig. 1 ist ein erfindungsgemäßes Elektrowerkzeug in der Aufsicht dargestellt und insgesamt mit der Ziffer 10 bezeichnet.

Im dargestellten Fall handelt es sich um einen Winkelschleifer mit stabförmigem Gehäuse, das in Fig. 1 lediglich gestrichelt mit 12 angedeutet ist.

Das Elektrowerkzeug 10 weist einen Elektromotor mit einem selbsttragenden Stator 18 auf, an dessen beiden Enden ein erstes Stützteil 20 und eine zweites Stützteil 22 vorgesehen ist.

Die beiden Stützteile 20, 22 sind durch den Stator 18 des Elektromotors 16 hindurch zu einer festen Einheit verschraubt, an der weitere Teile des Elektrowerkzeuges befestigt sind. So ist am ersten Stützteil 20 ein Werkzeugkopf 14 mit Getriebe aufgenommen. Ferner sind optische Schalter 52, 73 daran befestigt. Am zweiten Stützteil sind weitere optische Schalter befestigt, von denen einer mit 90 angedeutet ist. Auch die Motorwelle mit dem Anker (nicht dargestellt) ist an den Stützteilen 20, 22 bzw. dem Werkzeugkopf 14 gelagert. Schließlich ist eine Steuerelektronik (nicht dargestellt) zur Steuerung des Elektrowerkzeuges 10 am zweiten Stützteil 22 befestigt. Auch das Gehäuse 12 des Elektrowerkzeuges ist an den beiden Stützteilen 20, 22 befestigt.

Die Schalter sind als optische Schalter ausgebildet, mit Lichtleitern, zwischen denen die übertragenen Signale über Kontrollelemente beeinflussbar sind, wobei den Lichtleitern Sende- und Empfangselemente zugeordnet sind, wie grundsätzlich aus der deutschen Patentanmeldung 101 41 1 161.8 bekannt, die jedoch nicht vorveröffentlicht ist und deren Offenbarung hier vollständig einbezogen wird.

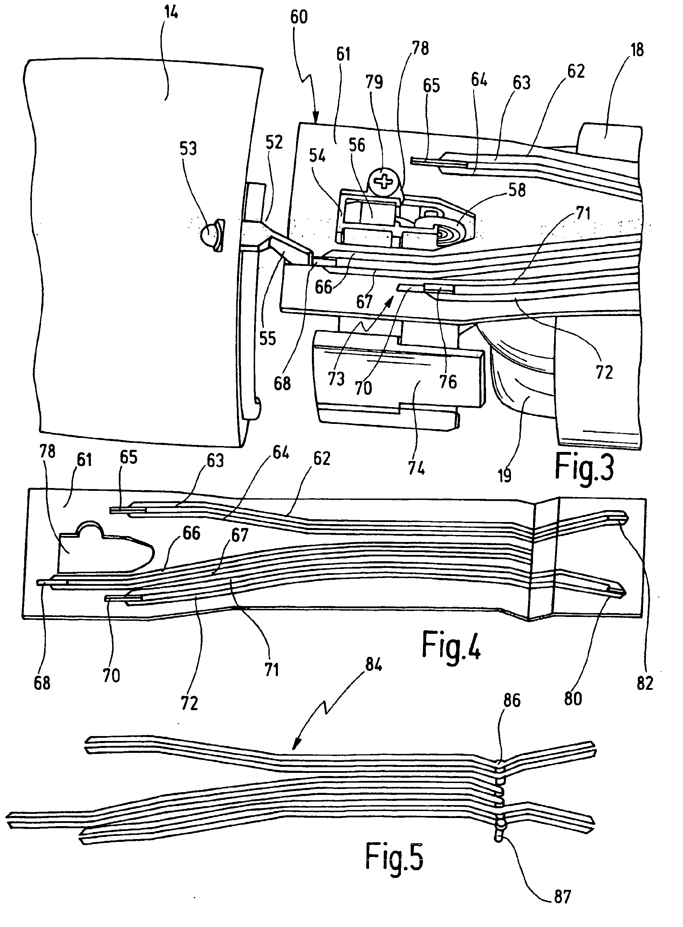

Am ersten Stützteil 20 sind einander gegenüberliegend an der Oberseite des Elektrowerkzeuges 10 und um 180° demgegenüber versetzt an der Unterseite je ein Bürstenhalter 54 befestigt, in dem eine Bürste (Kohle) 56 aufgenommen ist. Zum Andruck der Bürsten 56 dient je eine Bürstenfeder 58, die in Fig. 3 schematisch dargestellt ist.

In den Fig. 1 und 2 sind ferner noch die Befestigungslöcher 13 für einen am Werkzeugkopf 14 aufgenommene Spannhebel erkennbar, der zum Ein- und Ausspannen des Werkzeuges (etwa einer Schleifscheibe) dient. Da das Elektrowerkzeug 10 nur mit geschlossenem Spannhebel betrieben werden soll, ist dem Spannhebel ein Sensor zugeordnet, durch den laufend überprüft wird, ob sich der Spannhebel in seiner geschlossenen Spannstellung befindet. Hierzu ist am oberen Ende des Werkzeugkopfes 14 ein lichtoptischer Schalter 52 vorgesehen, der über ein durch den Spannhebel verschiebbares Schaltelement 53 betätigbar ist. Ist der Spannhebel geschlossen, so wird das Schaltelement 53 verschoben, was zur Freigabe eines Lichtstrahls führt, der über Lichtleiter übertragen wird, was von einer zugeordneten Auswertelogik ausgewertet wird.

Gemäß den Figuren 1 und 2 ist ferner ein Tragelement 60 auf der Oberseite des ersten und zweiten Stützkörpers befestigt, auf dem eine Mehrzahl von Lichtleitern befestigt sind, die Teile der optischen Schalter 52, 73, 90 sind.

Aus Fig. 3 ist der Aufbau der beim Elektrowerkzeug 10 verwendeten optischen Schalter 52, 73, 90 näher zu ersehen. Jeder optische Schalter weist zwei Lichtleiter auf, von denen einer als Sendeleiter ausgeführt ist, der mit einer LED gekoppelt ist, während der andere Lichtleiter als Empfangsleiter ausgebildet ist und mit einer zugeordneten Auswerteeinheit verbunden ist. Im dargestellten Fall enden zwei zugeordnete Lichtleiter jeweils in einem gewissen Abstand in Form von Prismen, so dass ein Lichtübertritt dazwischen erfolgen kann. Befindet sich keinerlei Objekt zwischen diesen beiden Prismen, so erfolgt ein Lichtübertritt aus dem Sendeleiter in den Empfangsleiter, was von der Auswertelogik registriert wird.

Gemäß Fig. 3 sind nun insgesamt sechs Lichtleiter 63, 64, 66, 67, 71, 72 dargestellt, die jeweils in Ausnehmungen 62 eines Formkörpers 61 aufgenommen, die als Nuten ausgeführt sind. Der Formkörper 61 ist Teil des Tragelementes 60, dessen Form aus Fig. 4 näher zu ersehen ist. Bei dem Formkörper 61 handelt es sich im wesentlichen um eine Platte aus einem geeigneten Kunststoff, der in der Erstreckungsrichtung der darin aufgenommenen Lichtleiter 63 bis 72 in geeigneter Weise gekrümmt ist. Das Kunststoffmaterial des Formkörpers 61 weist vorzugsweise mechanisch und gegebenenfalls akustisch dämpfende Eigenschaften auf, um Erschütterungen besser zu dämpfen. Da die Lichtleiter 63-72 in zugeordneten Ausnehmungen 62 in Form von Nuten eingelegt sind, sind sie gegen Umwelteinflüsse von außen besonders gut geschützt, so dass ein zuverlässiger Betrieb gewährleistet ist. Außerdem wird ein günstiges Signal-/Rauschverhältnis infolge der durch die Ausnehmungen 62 vorgegebenen Abstände sichergestellt und die Lichtleiter in ihrem Verlauf fixiert. Hierzu können vorzugsweise starre Lichtleiter verwendet werden, die in der gewünschten Form dreidimensional gekrümmt sind.

Im dargestellten Fall ist je zwei Enden von einander zugeordneten Lichtleitern 63, 64 bzw. 66, 67 bzw. 71, 72 je eine längliche Ausnehmung 65 bzw. 68 bzw. 70 zugeordnet, die sich von den beiden Enden im Bereich der Prismen aus nach außen hin erstreckt. In diese Ausnehmung 65, 68, 70 kann ein zugeordnetes Schaltelement eingreifen, durch das der Lichtübertritt zwischen den beiden Enden unterbrochen werden kann.

In Fig. 3 ist der Ausnehmung 68 zwischen den beiden Lichtleitern 66, 67 ein Schieber 55 zugeordnet, der mittels des Schaltelementes 53 in den Bereich zwischen den beiden Prismenenden verschiebbar ist, um so den Lichtübertritt zu unterbrechen. Bei dem Schalter 73, dem die beiden Lichtleiter 71, 72 zugeordnet sind, ist im Bereich der Ausnehmung 70 ein Schaltelement 74 vorgesehen, das am ersten Stützteil 20 verschwenkbar aufgenommen ist und mit einer Schaltzunge 76 in den Bereich der Ausnehmung 70 zwischen den beiden Prismenenden der Lichtleiter 71, 72 gelangen kann.

Der Formkörper 61 weist ferner eine geeignete Ausnehmung auf, um eine Montage des Bürstenhalters 54 mit Bürste 56 und Bürstenfeder 58 des Elektromotors 16 zu erlauben. In Fig. 3 ist eine zugeordnete Befestigungsschraube 79 erkennbar.

Fig. 4 zeigt eine Gesamtansicht des Tragelementes 60 nebst Lichtleitern 63-72.

Aus Fig. 5 ist zu ersehen, wie die betreffenden Lichtleiter 63-72 zu einem vorgefertigten Lichtleiterbündel 84 zusammengefasst sein können, die vorzugsweise starr ausgebildet sind und über eine gemeinsame Aufnahme 86 zusammengehalten sind. In dieser Aufnahme sind Ausnehmungen zum Anschluss von LEDs für zugeordnete Sender-Dioden aufgenommen, sowie Anschlüsse für Empfänger-Elemente. In Fig. 5 ist lediglich eine LED 87 beispielhaft angedeutet.

Aus den Fig. 1 und 2 ist ferner zu ersehen, wie das Tragelement 60 mit den darin aufgenommenen Lichtleitern auf die Oberseite der beiden Stützteile 20, 22 aufgesetzt wurde und unmittelbar am Werkzeugkopf 14 eingesteckt wurde. Bei nachfolgend aufgesetztem Gehäuse dichtet dieses vorzugsweise mit den Rändern des Tragelementes 60 ab. Das Tragelement 60 liegt somit in einer unmittelbar an das aufgesetzte Gehäuse angrenzenden Position, wobei die darin aufgenommenen Lichtleiter gegen etwa eindringenden Schmutz oder dergleichen sicher geschützt sind.

In Fig. 2 ist ferner noch der leicht abgewinkelte Verlauf des Tragelementes 60 im Bereich der Aufnahme 86 erkennbar, an der die Sender-LEDs und Empfänger-Elemente angeordnet sind. Gleichfalls sind aus Fig. 2 die den Schaltern 73 und 90 zugeordneten Schaltelemente 74 und 91 erkennbar, durch die die Lichtübertragung zwischen zusammenwirkenden Lichtleitern unterbrochen werden kann.

Es versteht sich, dass auch herkömmliche Glaslichtleiter oder Kunststofflichtleiter, die selbst in geeigneter Weise ummantelt sind, mit Kunststoff ummantelt werden können. In diesem Fall kann der Formkörper aus einem erheblich weicheren Material mit deutlich verbesserten mechanischen und akustischen Dämpfungseigenschaften hergestellt werden. Damit können sich verbesserte Vibrationsdämpfungen und Geräuschdämpfungen ergeben und ein besonders zuverlässiger Langzeitbetrieb gewährleistet werden.

## Patentansprüche

1. Elektrowerkzeug mit einem Gehäuse (12), mit einem Elektromotor (16) zum Antrieb eines Werkzeugs und mit mindestens einem Lichtleiter (63, 64, 66, 67, 71, 72), der mit einem Tragelement (60) kombiniert ist, **dadurch gekennzeichnet, dass** das Tragelement (60) als vorgeformtes, selbstständig tragendes, vom Gehäuse (12) getrenntes Teil ausgebildet ist, das mit mehreren daran befestigten Lichtleitern (63, 64, 66, 67, 71, 72) zu einer formstabilen Einheit zusammengefügt und am Gehäuse (12) montiert ist, um die Lichtleiter (63, 64, 66, 67, 71, 72) relativ zum Gehäuse (12) zu positionieren.

2. Elektrowerkzeug nach Anspruch 1, **dadurch gekennzeichnet, dass** das Tragelement (60) einen Formkörper (61) aufweist, der Ausnehmungen (62) zur Aufnahme von Lichtleitern (63, 64, 66, 67, 71, 72) aufweist.

3. Elektrowerkzeug nach Anspruch 1 oder 2, **dadurch gekennzeichnet, dass** zumindest ein Lichtleiter (63, 64, 66, 67, 71, 72) als starrer Lichtleiter aus Kunststoff ausgebildet ist.

4. Elektrowerkzeug nach Anspruch 1 oder 2, **dadurch gekennzeichnet, dass** zumindest ein Lichtleiter als flexibler Lichtleiter aus Kunststoff ausgebildet ist.

5. Elektrowerkzeug nach Anspruch 1 oder 2, **dadurch gekennzeichnet, dass** zumindest ein Lichtleiter als Glasfaserlichtleiter ausgebildet ist.

6. Elektrowerkzeug nach Anspruch 5, **dadurch gekennzeichnet, dass** der Glasfaserlichtleiter als ummanteltes Glasfaserbündel ausgebildet ist.

7. Elektrowerkzeug nach einem der vorhergehenden Ansprüche, **dadurch gekennzeichnet, dass** mindestens ein Schalter (52, 73, 90) oder Sensor vorgesehen ist, der zwei Lichtleiter (63, 64, 66, 67, 71, 72), ein Sendeelement (87) und ein Empfangselement, sowie ein Kontrollelement (53, 74, 91) zur Beeinflussung der zwischen den Lichtleitern (63, 64, 66, 67, 71, 72) übertragenen Lichtsignale aufweist.

8. Elektrowerkzeug nach einem der Ansprüche 2 bis 7, **dadurch gekennzeichnet, dass** der Formkörper (61) eine Aufnahme (86) für Sende- oder Empfangselemente (87) oder für Schaltelemente zur Beeinflussung von über einen Lichtleiter übertragener Strahlung aufweist, die jeweils einem oder mehreren Lichtleitern (63, 64, 66, 67, 71, 72) zugeordnet sind.

9. Elektrowerkzeug nach einem der Ansprüche 2 bis 8, **dadurch gekennzeichnet, dass** der Formkörper (61) eine Aufnahme (86) für LEDs (87) aufweist.

10. Elektrowerkzeug nach einem der vorhergehenden Ansprüche, **dadurch gekennzeichnet, dass** das Tragelement (60) mit einem Gehäuse (12) des Elektrowerkzeuges (10) zur Abdichtung der mit dem Tragelement (60) verbundenen Lichtleiter (63, 64, 66, 67, 71, 72) und/oder damit gekoppelter Sende- oder Empfangselemente (87) oder Schaltelemente (74, 91) gegenüber Kontamination durch Staub oder dergleichen zusammenwirkt.

11. Elektrowerkzeug nach einem der vorhergehenden Ansprüche, **dadurch gekennzeichnet, dass** das Tragelement (60) ein vibrationsdämpfendes und/oder akustisch dämpfendes Material umfasst.

## Claims

1. An electric tool comprising a housing (12), an electric motor (16) for driving a tool, and at least one optical waveguide (63, 64, 66, 67, 71, 72) which is combined with a support element (60), **characterized in that** the support element (60) is configured as a pre-shaped, independently stable part separated from the housing (12) and is combined with several optical waveguides (63, 64, 66, 67, 71, 72) to a unit of stable shape and is fixed to the housing (12) for positioning the optical waveguides (63, 64, 66, 67, 71, 72) relative to the housing (12).

2. The electric tool of claim 1, **characterized in that** the support element (60) comprises a shaped body (61) having recesses (62) for receiving optical waveguides (63, 64, 66, 67, 71, 72).

3. The electric tool of claim 1 or claim 2, **characterized in that** at least one optical waveguide (63, 64, 66, 67, 71, 72) is configured as rigid optical waveguide made from a plastic material.

4. The electric tool of claim 1 or claim 2, **characterized in that** at least one optical waveguide is configured as flexible optical waveguide made from a plastic material.

5. The electric tool of claim 1 or claim 2, **characterized in that** at least one optical waveguide is configured as glass-fiber optical waveguide.

6. The electric tool of claim 5, **characterized in that** the glass-fiber optical waveguide is configured as sheathed glass fiber bundle.

7. The electric tool of the preceding claims, **characterized in that** at least one switch (52, 73, 90) or sensor is provided which comprises two optical waveguides (63, 64, 66, 67, 71, 72), a transmitter element (87) and a receiver element, as well as a controlling element (53, 74, 91) adapted to influence the light signals transmitted between the optical waveguides (63, 64, 66, 67, 71, 72).

8. The electric tool of any of claims 2 to 8, **characterized in that** the shaped body (61) comprises a support (86) for transmitter or receiver elements (87) or for switching elements for influencing radiation transmitted via an optical waveguide, which cooperate with one or more optical waveguides (63, 64, 66, 67, 71, 72), respectively.

9. The electric tool of any of claims 2 to 8, **characterized in that** the shaped body (61) comprises a mount (86) for LEDs (87).

10. The electric tool of any of the preceding claims, wherein the support element (60) cooperates with a housing (12) of the electric tool (10) for sealing the optical waveguides (63, 64, 66, 67, 71, 72) connected with the support element (60), and/or transmitter or receiver elements (87) or switching elements (74, 91) coupled with them, against contamination by dust or the like.

11. The electric tool as defined in any of the preceding claims, **characterized in that** the support element (60) comprises a vibration-damping and/or acoustically damping material.

## Revendications

1. Outil électrique comportant un boîtier (12), un moteur électrique (16), destiné à entraîner un outil, et au moins une fibre optique (63, 64, 66, 67, 71, 72) combinée à un élément support (60), **caractérisé en ce que** l'élément support (60) est réalisé sous forme de pièce préformée autoporteuse, séparée du boîtier (12), laquelle est réalisée sous la forme d'une unité de forme stable constituée par l'assemblage de plusieurs fibres optiques qui sont fixées à ladite pièce et laquelle est montée sur le boîtier (12) afin de positionner les fibres optiques (63, 64, 66, 67, 71, 72) par rapport au boîtier (12).

2. Outil électrique selon la revendication 1, **caractérisé en ce que** l'élément support (60) comporte un corps moulé (61) comportant des évidements (62) destinés à recevoir des fibres optiques (63, 64, 66, 67, 71, 72).

3. Outil électrique selon la revendication 1 ou 2, **caractérisé en ce qu'**au moins une fibre optique (63, 64, 66, 67, 71, 72) est réalisée en matière synthétique sous forme de fibre optique rigide.

4. Outil électrique selon la revendication 1 ou 2, **caractérisé en ce qu'**au moins une fibre optique est réalisée en matière synthétique sous forme de fibre optique flexible.

5. Outil électrique selon la revendication 1 ou 2, **caractérisé en ce qu'**au moins une fibre optique est réalisée sous forme de fibre optique en fibres de verre.

6. Outil électrique selon la revendication 5, **caractérisé en ce que** la fibre optique en fibres de verre est réalisée sous forme de faisceau de fibres de verre entouré d'une gaine.

7. Outil électrique selon l'une quelconque des revendications précédentes, **caractérisé en ce qu'**il est prévu au moins un interrupteur (52, 73, 90) ou un capteur qui comporte deux fibres optiques (63, 64, 66, 67, 71, 72), un élément émetteur (87) et un élément récepteur, ainsi qu'un élément de contrôle (53, 74, 91) destiné à influer sur les signaux lumineux transmis entre les fibres optiques (63, 64, 66, 67, 71, 72).

8. Outil électrique selon l'une quelconque des revendications 2 à 7, **caractérisé en ce que** le corps moulé (61) comporte un logement (86) pour des éléments émetteur ou récepteur (87) ou pour des éléments de commande destinés à influer sur le faisceau transmis via une fibre optique et qui sont associés chacun à une ou à plusieurs fibres optiques (63, 64, 66, 67, 71, 72).

9. Outil électrique selon l'une quelconque des revendications 2 à 8, **caractérisé en ce que** le corps moulé (61) comporte un logement (86) pour des diodes électroluminescentes (87).

10. Outil électrique selon l'une quelconque des revendications précédentes, **caractérisé en ce que** l'élément support (60) coopère avec un boîtier (12) de l'outil électrique (10) pour que des fibres optiques (63, 64, 66, 67, 71, 72), assemblées à l'élément support (60), et/ou des éléments émetteur ou récepteur (87) ou des éléments de commande (74, 91) couplés auxdites fibres optiques, soient protégés hermétiquement contre une contamination par la poussière ou similaire.

11. Outil électrique selon l'une quelconque des revendications précédentes, **caractérisé en ce que** l'élément support (60) comporte un matériau anti-vibration et/ou anti-bruit.
